(19) Europäisches Patentamt
European Patent Office
Office européen des brevets

(11) EP 4 450 557 A1

(12) **EUROPEAN PATENT APPLICATION**
published in accordance with Art. 153(4) EPC

(43) Date of publication:
**23.10.2024 Bulletin 2024/43**

(21) Application number: **22907421.6**

(22) Date of filing: **12.12.2022**

(51) International Patent Classification (IPC):
***C08L 27/12*** *(2006.01)* ***C08K 3/34*** *(2006.01)*

(52) Cooperative Patent Classification (CPC):
**C08K 3/34; C08L 27/12**

(86) International application number:
**PCT/JP2022/045699**

(87) International publication number:
**WO 2023/112897 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.12.2021 JP 2021201922**

(71) Applicant: **DAIKIN INDUSTRIES, LTD.**
**Osaka-shi, Osaka 530-0001 (JP)**

(72) Inventors:
- **HIRANO, Seiichi**
  **Osaka-Shi, Osaka 530-0001 (JP)**
- **OTA, Daisuke**
  **Osaka-Shi, Osaka 530-0001 (JP)**
- **NOGUCHI, Tsuyoshi**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) PERFLUOROELASTOMER COMPOSITION AND PERFLUOROELASTOMER CROSSLINKED PRODUCT

(57) Provided is a perfluoroelastomer composition comprising (A) a nitrile group-containing perfluoroelastomer, (B) an iodine or bromine-containing perfluoroelastomer not containing a nitrile group, and (C) at least one compound selected from the group consisting of an inorganic nitride and an ammonia-generating compound.

EP 4 450 557 A1

## Description

TECHNICAL FIELD

The present disclosure relates to a perfluoroelastomer composition and a perfluoroelastomer crosslinked product.

BACKGROUND ART

Patent Document 1 discloses a perfluoropolymer having randomly copolymerized units of tetrafluoroethylene, perfluoro(alkyl vinyl) ether, and fluorinated cure site monomer containing nitrile groups, wherein the perfluoropolymer further comprises iodo moieties present in an amount of least about 0.05 percent, by weight of the perfluoropolymer.
Patent Document 2 discloses a curable composition consisting of a perfluoroelastomer and a curing agent, wherein the perfluoroelastomer comprises copolymerized units of (1) tetrafluoroethylene, (2) a perfluorovinyl ether selected from the group consisting of perfluoro(alkyl vinyl) ethers, perfluoro(alkoxy vinyl) ethers, and mixtures thereof, and (3) a cure site monomer selected from the group consisting of nitrile-containing fluorinated olefins and nitrile-containing fluorinated vinyl ethers; and the curing agent is selected from the group consisting of diaminobisphenol AF, an organic peroxide, and a compound, other than an ammonium salt of an organic or inorganic acid, that decomposes at a temperature between 40°C and 330°C to produce ammonia.

RELATED ART

PATENT DOCUMENTS

Patent Document 1: Japanese Translation of PCT International Application Publication No. 1993-500070
Patent Document 2: Japanese Translation of PCT International Application Publication No. 2004-532902

SUMMARY OF THE INVENTION

PROBLEM TO BE SOLVED BY THE INVENTION

An object of the present disclosure is to provide a perfluoroelastomer composition capable of providing a crosslinked product having excellent compression set property and excellent transparency, and a perfluoroelastomer crosslinked product having excellent compression set property and excellent transparency.

MEANS FOR SOLVING THE PROBLEM

The present disclosure provides a perfluoroelastomer composition comprising (A) a nitrile group-containing perfluoroelastomer, (B) an iodine or bromine-containing perfluoroelastomer not containing nitrile group, and (C) at least one compound selected from the group consisting of an inorganic nitride and an ammonia-generating compound.
In the perfluoroelastomer composition of the present disclosure, the content of the iodine or bromine-containing perfluoroelastomer (B) is preferably 0.5 to 10 parts by mass based on 100 parts by mass of the nitrile group-containing perfluoroelastomer (A).
In the perfluoroelastomer composition of the present disclosure, the compound (C) is preferably silicon nitride.
Also, the present disclosure provides a perfluoroelastomer crosslinked product obtained by crosslinking the perfluoroelastomer composition.
Also, the present disclosure provides a perfluoroelastomer crosslinked product having a haze value of 95% or less and a compression set of 25 to 40%.
The perfluoroelastomer crosslinked product of the present disclosure preferably has a total light transmittance of 85% or more.
The perfluoroelastomer crosslinked product of the present disclosure preferably contains triazine ring.
The perfluoroelastomer crosslinked product of the present disclosure preferably contains iodine atom or bromine atom.
The perfluoroelastomer crosslinked product of the present disclosure preferably contains silicon atom.

EFFECTS OF INVENTION

The present disclosure can provide a perfluoroelastomer composition capable of providing a crosslinked product having excellent compression set property and excellent transparency, and a perfluoroelastomer crosslinked product having excellent compression set property and excellent transparency.

DESCRIPTION OF EMBODIMENTS

Hereinafter, specific embodiments of the present disclosure will now be described in detail, but the present disclosure is not limited to the following embodiments.
The perfluoroelastomer composition of the present disclosure comprises (A) a nitrile group-containing perfluoroelastomer, (B) an iodine or bromine-containing perfluoroelastomer not containing nitrile group, and (C) at least one compound selected from the group consisting of an inorganic nitride and an ammonia-generating compound.
Patent Document 1 discloses that the perfluoropolymers react with peroxide curing agents and crosslinking coagents to give unique polymer networks (in which crosslinks are formed both at random points along the polymer chain and at the ends of the chains). Moreover, it discloses that such polymers have excellent strength and compression set properties, as well as good processing characteristics.
However, when the perfluoropolymer described in Patent Document 1 is crosslinked using a peroxide curing agent and a crosslinking coagent, there is the problem that excellent compression set properties cannot be obtained.
Patent Document 2 discloses that it would be beneficial to have perfluoroelastomer articles which are translucent or transparent and lightly colored or colorless, and which contain a very low amount of metals, while maintaining good tensile properties and low compression set. However, the crosslinked product obtained from the curable composition described in Patent Document 2 also has the problem of failing to simultaneously achieve sufficient compression set properties and transparency.
Having conducted diligent research into the means of solving these problems, the inventors found that adding the iodine or bromine-containing perfluoroelastomer not containing nitrile group (B) and the compound (C) to the nitrile group-containing perfluoroelastomer (A) results in an improved transparency of the resulting crosslinked product without significantly deteriorating the compression set properties of the resulting crosslinked product. Although the reason therefor is not clear, it is conjectured that the nitrile group-containing perfluoroelastomer (A) forms a crosslinked perfluoroelastomer due to the action of the compound (C) and, on the other hand, the iodine or bromine-containing perfluoroelastomer (B) can move freely in the crosslinked product without being crosslinked, and thus can fill slight defects that cause cloudiness of the crosslinked product. The perfluoroelastomer composition of the present disclosure and the perfluoroelastomer crosslinked product of the present disclosure were accomplished based on such findings.
The perfluoroelastomer composition of the present disclosure contains at least the perfluoroelastomers (A) and (B) as perfluoroelastomers. The perfluoroelastomer in the present disclosure means a fluoropolymer having a perfluoromonomer unit content of 90 mol% or more and preferably 91 mol% or more based on all polymerized units, having a glass transition temperature of 20°C or lower, having a melting peak (ΔH) of 4.5 J/g or lower, and having a fluorine atom concentration in the fluoropolymer of 71% by mass or more and preferably 71.5% by mass or more. The fluorine atom concentration in the fluoropolymer in the present disclosure is the concentration (% by mass) of the fluorine atoms contained in the fluoropolymer calculated based on the type and content of each monomer constituting the fluoropolymer.
In the present disclosure, the perfluoromonomer is a monomer that does not contain a carbon-hydrogen bond within the molecule. The perfluoromonomer may be a monomer containing carbon atoms and fluorine atoms in which some of the fluorine atoms bonded to any of the carbon atoms are replaced by chlorine atoms, and may be a monomer containing nitrogen atom, oxygen atom, sulfur atom, phosphorus atom, boron atom, or silicon atom in addition to the carbon atoms. The perfluoromonomer is preferably a monomer in which all hydrogen atoms are replaced with fluorine atoms. A monomer that provides a crosslinking site is not encompassed within the perfluoromonomer.
The monomer that provides a crosslinking site is a monomer (a cure site monomer) having a crosslinkable group that provides the perfluoroelastomer with a crosslinking site for forming a crosslink.
In the present disclosure, the content of each monomer constituting the perfluoroelastomer can be calculated by suitably combining NMR, FT-IR, elemental analysis, fluorescent X-ray analysis, and other known methods according to the type of monomer.
The perfluoromonomer that provides a perfluoromonomer unit constituting the perfluoroelastomer is preferably at least one selected from the group consisting of:

tetrafluoroethylene (TFE);
hexafluoropropylene (HFP);
a fluoromonomer represented by general formula (13): $CF_2$=CF-ORf$^{13}$ wherein Rf$^{13}$ represents a perfluoroalkyl group having 1 to 8 carbon atoms;

a fluoromonomer represented by general formula (14): $CF_2=CFOCF_2ORf^{14}$
wherein $Rf^{14}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms; and
a fluoromonomer represented by general formula (15):

$$CF_2=CFO(CF_2CF(Y^{15})O)_m(CF_2)_nF$$

wherein $Y^{15}$ represents a fluorine atom or a trifluoromethyl group, m is an integer of 1 to 4, and n is an integer of 1 to 4.

Each component contained in the perfluoroelastomer composition of the present disclosure will now be described in more detail.

(Nitrile group-containing perfluoroelastomer (A))

The perfluoroelastomer (A) contains nitrile group (-CN group). The nitrile group-containing perfluoroelastomer (A) can be crosslinked by cyclotrimerization of the nitrile groups to form a triazine ring, and can impart excellent compression set property and heat resistance to a crosslinked product.
The nitrile group-containing perfluoroelastomer (A) preferably has nitrile group (-CN group) at a main chain terminal and/or in a side chain.
The nitrile group-containing perfluoroelastomer (A) preferably contains a monomer unit having nitrile group. Examples of the monomer having nitrile group include monomers represented by:

formula: $CX^4_2=CX^5R_f^2\text{-}CN$

wherein $X^4$ and $X^5$ are each independently H, F, or an alkyl group having 1 to 5 carbon atoms; and $R_f^2$ is a linear or branched alkylene group or oxyalkylene group which may have one or more etheric oxygen atoms, which may have an aromatic ring, and in which some or all hydrogen atoms may be replaced with fluorine atoms.
Examples of the monomer having nitrile group include monomers represented by:

Formula: $CY^1_2=CY^1(CF_2)_n\text{-}CN$

wherein each $Y^1$ is independently a hydrogen atom or a fluorine atom, and n is an integer of 1 to 8;

Formula: $CF_2=CFCF_2Rf^8\text{-}CN$

wherein $Rf^8$ is $-(OCF_2)_n-$ or $-(OCF(CF_3))_n-$, and n is an integer of 0 to 5;

Formula: $CF_2=CFCF_2(OCF(CF_3)CF_2)_m(OCH_2CF_2CF_2)_nOCH_2CF_2\text{-}CN$

wherein m is an integer of 0 to 5, and n is an integer of 0 to 5;

Formula: $CF_2=CFCF_2(OCH_2CF_2CF_2)_m(OCF(CF_3)CF_2)_nOCF(CF_3)\text{-}CN$

wherein m is an integer of 0 to 5, and n is an integer of 0 to 5;

Formula: $CF_2=CF(OCF_2CF(CF_3))_mO(CF_2)_n\text{-}CN$

wherein m is an integer of 0 to 5, and n is an integer of 1 to 8;

Formula: $CF_2=CF(OCF_2CF(CF_3))_m\text{-}CN$

wherein m is an integer of 1 to 5;

Formula: $CF_2=CFOCF_2(CF(CF_3)OCF_2)_nCF(\text{-}CN)CF_3$

wherein n is an integer of 1 to 4;

Formula: $CF_2=CFO(CF_2)_nOCF(CF_3)-CN$

wherein n is an integer of 2 to 5;

Formula: $CF_2=CFO(CF_2)_n-(C_6H_4)-CN$

wherein n is an integer of 1 to 6;

Formula: $CF_2=CF(OCF_2CF(CF_3))_nOCF_2CF(CF_3)-CN$

wherein n is an integer of 1 to 2;

Formula: $CH_2=CFCF_2O(CF(CF_3)CF_2O)_nCF(CF_3)-CN$

wherein n is an integer of 0 to 5;

Formula: $CF_2=CFO(CF_2CF(CF_3)O)_m(CF_2)_n-CN$

wherein m is an integer of 0 to 5, and n is an integer of 1 to 3;

Formula: $CH_2=CFCF_2OCF(CF_3)OCF(CF_3)-CN$;

Formula: $CH_2=CFCF_2OCH_2CF_2-CN$

;

Formula: $CF_2=CFO(CF_2CF(CF_3)O)_mCF_2CF(CF_3)-CN$

wherein m is an integer of 0 or more;

Formula: $CF_2=CFOCF(CF_3)CF_2O(CF_2)_n-CN$

wherein n is an integer of 1 or more;

Formula: $CF_2=CFOCF_2OCF_2CF(CF_3)OCF_2-CN$.

Each of these monomers can be used singly or in any combination.

In particular, the monomer having nitrile group (-CN group) is preferably a monomer represented by:

Formula: $CF_2=CF(OCF_2CF(CF_3))_mO(CF_2)_n-CN$

wherein m is an integer of 0 to 5, n is an integer of 1 to 8; and more preferably $CF_2=CFOCF_2CF(CF_3)OCF_2CF_2CN$.

Examples of the nitrile group-containing perfluoroelastomer (A) include copolymers of monomers having TFE/a fluoromonomer represented by general formula (13), (14), or (15)/a monomer having nitrile group. In this case, the content of the monomer unit having nitrile group may be 0.1 to 5 mol% and may be 0.3 to 3 mol% based on the total amount of the TFE unit and the fluoromonomer unit represented by general formula (13), (14), or (15) from the viewpoint of good crosslinking characteristics and heat resistance.

When the nitrile group-containing perfluoroelastomer (A) is a copolymer of TFE/perfluoro (methyl vinyl ether) (PMVE)/a monomer having nitrile group, the compositional feature (mol%) of the nitrile group-containing perfluoroelastomer (A) is preferably 45 to 89.9/10 to 54.9/0.01 to 4, more preferably 55 to 77.9/20 to 49.9/0.1 to 3.5, even more preferably 55 to 69.8/30 to 44.8/0.2 to 3, and most preferably 55.3 to 69.5/30.3 to 44.5/0.2 to 2.8.

When the nitrile group-containing perfluoroelastomer (A) is a copolymer of TFE/a fluoromonomer having 4 to 12 carbon atoms and represented by general formula (13), (14), or (15)/a monomer having nitrile group, the compositional feature (mol%) of the nitrile group-containing perfluoroelastomer (A) is preferably 50 to 89.9/10 to 49.9/0.01 to 4, more preferably 60 to 87.9/12 to 39.9/0.1 to 3.5, even more preferably 65 to 84.8/15 to 34.8/0.2 to 3, and most preferably 66 to 84.3/15.5 to 33.8/0.2 to 2.8.

When the compositional feature is outside these ranges, the copolymer does not have properties of a rubber elastic body, and tends to have properties similar to those of a resin.

The nitrile group-containing perfluoroelastomer (A) is preferably at least one selected from the group consisting of a copolymer of TFE/a fluoromonomer represented by general formula (15)/a monomer having nitrile group and a copolymer of TFE/a fluoromonomer represented by general formula (13)/a monomer having a nitrile group.

The nitrile group-containing perfluoroelastomer (A) may have a polar terminal group. The terminal group means any group present at a main chain terminal or at a terminal of an optionally present long or short chain of the polymer. Examples of the polar terminal group include ionic groups such as a carboxylate ($-COO^-$) group and a sulfonate ($-OSO_3^-$) group, and nonionic groups such as alcohol ($-CH_2OH$), acyl fluoride (-COF), and amide ($-CONH_2$). The polar terminal group can be introduced into the elastomer by using an inorganic peroxide or the like as a polymerization initiator when producing the perfluoroelastomer by polymerizing the monomers. The presence/absence of the polar terminal group can be verified by Fourier transform infrared spectroscopy (FTIR).

The nitrile group-containing perfluoroelastomer (A) preferably has a glass transition temperature of -70°C or higher, more preferably -60°C or higher, and even more preferably -50°C or higher, from the viewpoint of excellent compression set properties at high temperatures. Also, the nitrile group-containing perfluoroelastomer (A) preferably has a glass transition temperature of 5°C or lower, more preferably 0°C or lower, and even more preferably -3°C or lower, from the viewpoint of good low-temperature resistance.

The glass transition temperature can be determined as follows: using a differential scanning calorimeter (DSC822e, manufactured by Mettler Toledo), a DSC curve is obtained by heating 10 mg of a sample at 10°C/min; and the temperature is read at the intermediate point of two intersections between each of the extension lines of the baselines before and after the secondary transition of the DSC curve and the tangent line at the inflection point of the DSC curve.

The nitrile group-containing perfluoroelastomer (A) preferably has a Mooney viscosity ML (1+20) at 170°C of 30 or more, more preferably 40 or more, and even more preferably 50 or more, from the viewpoint of good heat resistance. Also, the nitrile group-containing perfluoroelastomer (A) preferably has a Mooney viscosity ML (1+20) at 170°C of 150 or less, more preferably 120 or less, and even more preferably 110 or less, from the viewpoint of good processability.

The Mooney viscosity can be measured at 170°C in accordance with JIS K 6300 using a Mooney viscometer MV 2000E manufactured by ALPHA TECHNOLOGIES.

The nitrile group-containing perfluoroelastomer (A) can be produced by a conventional method.

(Iodine or bromine-containing perfluoroelastomer not containing nitrile group (B))

The perfluoroelastomer (B) contains iodine atom or bromine atom. The perfluoroelastomer (B) does not contain nitrile group, and is different from the perfluoroelastomer (A) in this respect. It is conjectured that the perfluoroelastomer (B) is present in the crosslinked product without being crosslinked even in the presence of the compound (C), and imparts the crosslinked product excellent transparency without impairing the excellent compression set property of the crosslinked product. Moreover, the iodine or bromine-containing perfluoroelastomer (B) continues to be present in the crosslinked product without being thermally volatilized, in addition, has excellent compatibility with the nitrile group-containing perfluoroelastomer (A), and thus can impart the crosslinked product excellent compression set property and excellent transparency. Also, the iodine or bromine-containing perfluoroelastomer (B) can be produced by an iodine transfer polymerization method, and thus the molecular weight can be easily regulated. Accordingly, the elastomer (B) having a molecular weight suitable according to the physical properties of the nitrile group-containing perfluoroelastomer (A) can be easily produced, and, as a result, the use the elastomer (B) is also advantageous in that the compression set property of the crosslinked product can be maintained, and transparency can be easily improved.

The iodine or bromine-containing perfluoroelastomer (B) preferably has iodine atom or bromine atom at a main chain terminal and/or in a side chain.

The iodine or bromine-containing perfluoroelastomer (B) is preferably at least one selected from the group consisting of a perfluoroelastomer containing a monomer unit having iodine atom or bromine atom, a perfluoroelastomer having iodine atom or bromine atom at a main chain terminal, and a perfluoroelastomer having iodine atom or bromine atom at a main chain terminal and also containing a monomer unit having iodine atom or bromine atom.

The monomer having iodine atom or bromine atom may be a monomer represented by:

Formula: $CX^4_2=CX^5R_f^2\text{-}X$

wherein $X^4$ and $X^5$ are each independently H, F, or an alkyl group having 1 to 5 carbon atoms; $R_f^2$ is a linear or branched alkylene group or oxyalkylene group which may have one or more etheric oxygen atoms, which may have an aromatic ring, and in which some or all hydrogen atoms may be replaced with fluorine atoms; and X is iodine atom or bromine atom.

Examples of the monomer having iodine atom or bromine atom include a fluoromonomer represented by:

Formula: $CX^{16}_2=CX^{16}\text{-}Rf^{16}CHR^{16}X$

wherein $X^{16}$ is each independently a hydrogen atom, a fluorine atom, or $CH_3$, $Rf^{16}$ is a fluoroalkylene group, a perfluoroalkylene group, a fluoro(poly)oxyalkylene group, or a perfluoro (poly) oxyalkylene group, $R^{16}$ is a hydrogen atom or $CH_3$, and X is iodine atom or bromine atom; a fluoromonomer represented by:

Formula: $CX^{16}2=CX^{16}-Rf^{17}X$

wherein $X^{16}$ is each independently a hydrogen atom, a fluorine atom, or $CH_3$, $Rf^{17}$ is a fluoroalkylene group, a perfluoroalkylene group, a fluoro(poly)oxyalkylene group, or a perfluoro(poly)oxyalkylene group, and X is iodine atom or bromine atom; a fluoromonomer represented by:

Formula: $CF_2=CFO(CF_2CF(CF_3)O)_m(CF_2)_n-X$

wherein m is an integer of 0 to 5, n is an integer of 1 to 3, and X is iodine atom, bromine atom, or $-CH_2I$; and a monomer represented by:

Formula: $CH_2=CFCF_2O(CF(CF_3)CF_2O)_m(CF(CF_3))_n-X$

wherein m is an integer of 0 to 5, n is an integer of 1 to 3, and X is iodine atom or bromine atom. Each of these monomers can be used singly or in any combination.

$X^{16}$ is preferably a fluorine atom. $Rf^{16}$ and $Rf^{17}$ are preferably a perfluoroalkylene group having 1 to 5 carbon atoms. $R^{16}$ is preferably a hydrogen atom.

The monomer having iodine atom or bromine atom is preferably at least one selected from the group consisting of $CF_2=CFOCF_2CF(CF_3)OCF_2CF_2CH_2I$, $CF_2=CFOCF_2CF_2CH_2I$, and $CH_2=CHCF_2CF_2I$, and is more preferably $CF_2=CFOCF_2CF_2CH_2I$.

The perfluoroelastomer having iodine atom or bromine atom at a main chain terminal can be produced by using an iodine compound or a bromine compound as a chain transfer agent when producing the perfluoroelastomer by polymerizing the monomers. Examples of the polymerization method performed using an iodine compound or a bromine compound include a method in which emulsion polymerization is carried out in an aqueous medium under pressure in the presence of the iodine compound or the bromine compound in a substantially oxygen-free state (iodine transfer polymerization method). Representative examples of the iodine compound or the bromine compound to be used include compounds represented by the general formula:

$R^{21}I_xBr_y$

wherein x and y are each an integer of 0 to 2 and satisfy $1 \leq x + y \leq 2$; and $R^{21}$ is a saturated or unsaturated fluorohydrocarbon group or chlorofluorohydrocarbon group having 1 to 16 carbon atoms, or a hydrocarbon group having 1 to 3 carbon atoms, and optionally containing an oxygen atom.

Examples of the iodine compound or bromine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodo- and monobromo-substitution product, diiodo- and monobromo-substitution product, and (2-iodoethyl)- and (2-bromoethyl)-substitution product of benzene. Each of these compounds may be used singly, or may be used in combination.

Among these, 1,4-diiodoperfluorobutane, 1,6-diiodoperfluorohexane, and 2-iodoperfluoropropane are preferably used from the viewpoint of polymerization reactivity, crosslinking reactivity, availability, and the like.

The iodine atom and bromine atom content in the iodine or bromine-containing perfluoroelastomer (B) is preferably 0.001 to 10% by mass, more preferably 0.01% by mass or more and even preferably 0.1% by mass or more, and is more preferably 5% by mass or less. When the iodine atom and bromine atom content is excessively low, the haze value is increased, and a crosslinked product exhibiting excellent transparency may not be obtained. The iodine atom and bromine atom content can be measured by elemental analysis.

The iodine or bromine-containing perfluoroelastomer (B) is preferably at least one selected from the group consisting of iodine or bromine-containing perfluoroelastomers (B) having a TFE unit, such as a copolymer of TFE/a fluoromonomer represented by general formula (13), (14), or (15), and a copolymer of TFE/a fluoromonomer represented by general formula (13), (14), or (15)/a monomer having iodine atom or bromine atom.

When the iodine or bromine-containing perfluoroelastomer (B) is a copolymer of TFE/perfluoro(methyl vinyl

ether) (PMVE), the compositional feature (mol%) of the iodine or bromine-containing perfluoroelastomer (B) is preferably 45 to 90/10 to 55, more preferably 55 to 80/20 to 45, even more preferably 55 to 70/30 to 45, and most preferably 56 to 69.5/30.5 to 44.

When the iodine or bromine-containing perfluoroelastomer (B) is a copolymer of TFE/PMVE/a monomer having iodine atom or bromine atom, the compositional feature (mol%) of the iodine or bromine-containing perfluoroelastomer (B) is preferably 45 to 89.9/10 to 54.9/0.01 to 4, more preferably 55 to 77.9/20 to 49.9/0.01 to 3.5, even more preferably 55 to 69.8/30 to 44.8/0.03 to 3.0, and most preferably 55.3 to 69.5/30.3 to 44.5/0.05 to 2.5.

When the iodine or bromine-containing perfluoroelastomer (B) is a copolymer of TFE/a fluoromonomer having 4 to 12 carbon atoms and represented by general formula (13), (14), or (15), the compositional feature (mol%) of the iodine or bromine-containing perfluoroelastomer (B) is preferably 50 to 90/10 to 50, more preferably 60 to 88/12 to 40, even more preferably 65 to 85/15 to 35, and most preferably 66 to 84/16 to 34.

When the iodine or bromine-containing perfluoroelastomer (B) is a copolymer of TFE/a fluoromonomer having 4 to 12 carbon atoms and represented by general formula (13), (14), or (15)/a monomer having iodine atom or bromine atom, the compositional feature (mol%) of the iodine or bromine-containing perfluoroelastomer (B) is preferably 50 to 89.9/10 to 49.9/0.01 to 4, more preferably 60 to 87.9/12 to 39.9/0.1 to 3.5, even more preferably 65 to 84.8/15 to 34.8/0.2 to 3.0, and most preferably 66 to 84.3/15.5 to 33.8/0.2 to 2.0.

When the compositional feature is outside these ranges, the copolymer does not have properties of a rubber elastic body, and tends to have properties similar to those of a resin.

The iodine or bromine-containing perfluoroelastomer (B) is preferably at least one selected from the group consisting of a copolymer of TFE/a fluoromonomer represented by general formula (13), a copolymer of TFE/a fluoromonomer represented by general formula (13)/a monomer having iodine atom or bromine atom, a copolymer of TFE/a fluoromonomer represented by general formula (15), and a copolymer of TFE/a fluoromonomer represented by general formula (15)/a monomer having iodine atom or bromine atom.

The iodine or bromine-containing perfluoroelastomer (B) preferably has a glass transition temperature of -70°C or higher, more preferably -60°C or higher, and even more preferably -50°C or higher, from the viewpoint of excellent compression set properties at high temperatures. Also, it preferably has a glass transition temperature of 5°C or lower, more preferably 0°C or lower, and even more preferably -3°C or lower, from the viewpoint of good low-temperature resistance.

The glass transition temperature can be determined as follows: using a differential scanning calorimeter (DSC822e, manufactured by Mettler Toledo), a DSC curve is obtained by heating 10 mg of a sample at 10 °C/min; and the temperature is read at the intermediate point of two intersections between each of the extension lines of the baselines before and after the secondary transition of the DSC curve and the tangent line at the inflection point of the DSC curve.

The iodine or bromine-containing perfluoroelastomer (B) preferably has a Mooney viscosity ML (1+10) at 100°C of 10 or more, more preferably 20 or more, and even more preferably 25 or more, from the viewpoint of good heat resistance. Also, the iodine or bromine-containing perfluoroelastomer (B) preferably has a Mooney viscosity ML (1+10) at 100°C of 120 or less, more preferably 100 or less, and even more preferably 80 or less, from the viewpoint of good processability.

The Mooney viscosity can be measured at 100°C in accordance with JIS K 6300 using a Mooney viscometer MV 2000E manufactured by ALPHA TECHNOLOGIES.

The perfluoroelastomer (B) can be produced by a conventional method.

The content of the iodine or bromine-containing perfluoroelastomer (B) is preferably 0.5 to 10 parts by mass, more preferably 1.0 parts by mass or more, even more preferably 2.0 parts by mass or more, and particularly preferably 3.0 parts by mass or more, and is more preferably 7 parts by mass or less and more preferably 5 parts by mass or less, based on 100 parts by mass of the nitrile group-containing perfluoroelastomer (A). When the content of the iodine or bromine-containing perfluoroelastomer (B) is excessively high, a crosslinked product exhibiting excellent compression set property may not be obtained, and crushing (cracking) may occur during compression. An excessively low content of the iodine or bromine-containing perfluoroelastomer (B) results in an increased haze value, and a crosslinked product exhibiting excellent transparency may not be obtained.

(Compound (C))

The perfluoroelastomer composition of the present disclosure contains at least one compound (C) selected from the group consisting of an inorganic nitride and an ammonia-generating compound. With the compound (C), the nitrile groups contained in the nitrile group-containing perfluoroelastomer (A) are cyclotrimerized to form a triazine ring, and thus the nitrile group-containing perfluoroelastomer (A) can be crosslinked. On the other hand, the iodine or bromine-containing perfluoroelastomer (B) not containing nitrile group is not crosslinked even in the presence of the compound (C), and is present in an uncrosslinked state in the resulting crosslinked product. It is conjectured that the iodine or bromine-containing perfluoroelastomer (B) present in an uncrosslinked state in the resulting crosslinked product imparts

the crosslinked product excellent transparency without impairing the excellent compression set property of the crosslinked product.

The inorganic nitride is not limited, and examples include silicon nitride ($Si_3N_4$), lithium nitride, titanium nitride, aluminum nitride, boron nitride, vanadium nitride, and zirconium nitride. Among these, silicon nitride can provide nano-sized fine particles and is thus preferable.

The ammonia-generating compound is preferably a compound that generates ammonia at 40 to 330°C.

The ammonia-generating compound is preferably urea, a derivative thereof, or an ammonium salt, more preferably urea or an ammonium salt, and even more preferably urea. The ammonium salt may be either an organic ammonium salt or an inorganic ammonium salt. Also, the ammonia-generating compound may be a compound that reacts with a small amount of water to generate ammonia.

Examples of the urea derivative include biurea, thiourea, urea hydrochloride, and biuret.

Examples of the organic ammonium salt include non-fluorine carboxylic or sulfonic acid ammonium salts such as ammonium benzoate, ammonium adipate, and ammonium phthalate.

Examples of the inorganic ammonium salt include the compounds described in Japanese Patent Laid-Open No. 9-111081, such as ammonium sulfate, ammonium carbonate, ammonium nitrate, and ammonium phosphate.

In addition, examples of the ammonia-generating compound also include acetaldehyde ammonia, hexamethylenetetramine, formamidine, formamidine hydrochloride, formamidine acetate, t-butyl carbamate, benzyl carbamate, and phthalamide.

The compound (C) is preferably at least one selected from the group consisting of urea, urea derivatives, and inorganic nitride because excellent compression set properties and excellent transparency can be simultaneously achieved at a high level, more preferably inorganic nitride, and even more preferably silicon nitride.

The content of the compound (C) is preferably 0.05 to 10 parts by mass, more preferably 0.1 part by mass or more, and even more preferably 0.2 parts by mass or more, and is more preferably 5 parts by mass or less, even more preferably 3 parts by mass or less, particularly preferably 1.0 parts by mass or less, and most preferably 0.5 part by mass or less, based on 100 parts by mass of the nitrile group-containing perfluoroelastomer (A). When the content of the compound (C) is excessively high, scorch may occur, and when the content of the compound (C) is excessively low, the crosslinking of the nitrile group-containing perfluoroelastomer (A) is insufficient, and a crosslinked product exhibiting excellent compression set property may not be obtained.

(Other components)

The perfluoroelastomer composition may further contain a filler. In one embodiment of the perfluoroelastomer composition, a filler is substantially not contained from the viewpoint of further increasing the transparency of the resulting crosslinked product, and, for example, only less than 0.01 part by mass of a filler is contained per 100 parts by mass of the nitrile group-containing perfluoroelastomer (A).

Examples of the filler include an imide-based filler having an imide structure such as polyimide, polyamideimide, and polyetherimide, an organic filler made of engineering plastic such as polyarylate, polysulfone, polyethersulfone, polyphenylene sulfide, polyether ether ketone, polyether ketone, and polyoxybenzoate, a metal oxide filler such as silicon oxide, aluminum oxide, and yttrium oxide, a metal carbide such as silicon carbide and aluminum carbide, a metal nitride filler such as aluminum nitride, and an inorganic filler such as carbon black, aluminum fluoride, and carbon fluoride.

Among these, from the viewpoint of shielding effects for various plasmas, carbon black, aluminum oxide, silicon oxide, yttrium oxide, silicon carbide, polyimide, and fluorocarbon are preferable.

Also, one of the above fillers may be used singly, or two or more may be used in combination.

Especially in fields not requiring high purity and non-contaminating properties, a commonly used additive that is added to the composition, such as a processing aid, a plasticizer, and a colorant, may be added, and one or more conventional cross-linking agents and cross-linking aids different from those described above may also be added.

The composition may contain an organic basic compound. Examples of the organic basic compound include:

octadecylamine of formula: $CH_3(CH_2)_{17}$-$NH_2$;
erucamide of formula: $H_2N$-C(O)-$(CH_2)_{11}$-CH=CH-$(CH_2)_7CH_3$;
oleamide of formula: $H_2N$-C(O)-$(CH_2)_7$-CH=CH-$(CH_2)_7CH_3$;
hexamethylenediamine of formula: $H_2N$-$(CH_2)_6$-$NH_2$; and
1,8-diazabicycloundec-7-en (DBU) of formula:

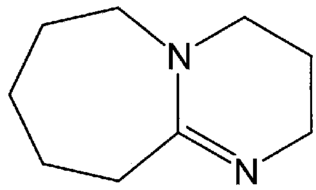

and the like.

The perfluoroelastomer composition can be prepared by mixing the above components by using a commonly used polymer processing machine, for example, an open roll, a Banbury mixer, a kneader, or the like. In addition, the fluorine-containing elastomer composition can also be prepared by a method involving a closed mixer. The perfluoroelastomer composition can be suitably used as a molding material for obtaining a crosslinked product by crosslinking and molding.

(Crosslinked product)

By crosslinking the perfluoroelastomer composition, a perfluoroelastomer crosslinked product can be obtained. The perfluoroelastomer crosslinked product of the present disclosure has excellent compression set property and excellent transparency.

The perfluoroelastomer crosslinked product according to one embodiment has a haze value of 95% or less and a compression set of 25 to 40%. The perfluoroelastomer crosslinked product according to this embodiment exhibits excellent compression set property even at high temperatures, moreover, exhibits excellent transparency, and thus can be used as a sealing material in fields that require excellent heat resistance and a high level of cleanliness. The perfluoroelastomer crosslinked product according to this embodiment is preferably obtained by crosslinking the perfluoroelastomer composition of the present disclosure.

The haze value of the perfluoroelastomer crosslinked product is preferably 95% or less, more preferably 90% or less, and even more preferably 80% or less. A lower haze value of the perfluoroelastomer crosslinked product is more preferable, and the lower limit of the haze value may be, for example, 50% or more. The haze value of the crosslinked product, irrespective of the thickness, can be measured in accordance with ASTM D1003.

The compression set of the perfluoroelastomer crosslinked product is preferably 50% or less, more preferably 40% or less, and even more preferably 30% or less.

The compression set of the perfluoroelastomer crosslinked product is the compression set measured after leaving it at 300°C for 72 hours at a compressibility of 25%. The compression set can be calculated by leaving the crosslinked product at 300°C for 72 hours while being compressed at a compressibility of 25%, releasing the compression, leaving the crosslinked product at 23°C for 30 minutes, and measuring the thickness of the crosslinked material before and after compression.

The total light transmittance of the perfluoroelastomer crosslinked product is preferably 85% or more, more preferably 88% or more, and even more preferably 90% or more. A higher total light transmittance of the perfluoroelastomer crosslinked product is more preferable, and the upper limit of the total light transmittance may be, for example, 95% or less. The total light transmittance of the crosslinked product, irrespective of the thickness, can be measured in accordance with ASTM D1003.

The perfluoroelastomer crosslinked product preferably contains triazine ring. The triazine ring imparts the crosslinked product excellent high-temperature compression set property without impairing the transparency of the crosslinked product. The presence/absence of triazine ring in the perfluoroelastomer crosslinked product can be verified by Fourier transform infrared spectroscopy (FT-IR).

The triazine ring content in the perfluoroelastomer crosslinked product is preferably 0.04 or more, and more preferably 0.05 or more. In the present disclosure, the triazine ring content in the crosslinked perfluoroelastomer is expressed as the ratio of the triazine ring content to the CF bond content in the perfluoroelastomer crosslinked product. The triazine ring content in the crosslinked perfluoroelastomer can be measured by Fourier transform infrared spectroscopy (FT-IR). The triazine ring content can be determined by using a Fourier transform infrared spectrophotometer (FT-IR) to obtain the infrared spectrum of the crosslinked product, and calculating the absorbance ratio (A1555/A2360) of the triazine ring peak (1555 $cm^{-1}$) to the overtone vibration peak (2360 $cm^{-1}$) of the CF bond appearing in the infrared spectrum.

The perfluoroelastomer crosslinked product preferably contains iodine atom or bromine atom. It is conjectured that the iodine atom or the bromine atom impart the crosslinked product excellent transparency without impairing the compression set properties of the crosslinked product. The presence/absence of iodine atom or bromine atom in the perfluoroelastomer crosslinked product can be verified by elemental analysis with an ion chromatograph of ash obtained

by ashing the crosslinked product.

The iodine atom and bromine atom content in the perfluoroelastomer crosslinked product is preferably 0.0001% by mass or more, more preferably 0.0005% by mass or more, and even more preferably 0.0008 or more, and is preferably 0.010% by mass or less, more preferably 0.005 or less, and even more preferably 0.002% by mass or less. The iodine atom and bromine atom content can be measured by elemental analysis with an ion chromatograph of ash obtained by ashing the crosslinked product.

The perfluoroelastomer crosslinked product preferably contains silicon atom. The silicon atom imparts the crosslinked product both excellent compression set property and excellent transparency at a high level. The presence/absence of silicon atom in the perfluoroelastomer crosslinked product can be verified by energy dispersive X-ray analysis (EDX).

The silicon atom content in the perfluoroelastomer crosslinked product is preferably 0.05% by mass or more and more preferably 0.1% by mass or more, and is preferably 1.0% by mass or less and more preferably 0.5% by mass or less. The silicon atom content can be measured by energy dispersive X-ray analysis (EDX).

The method for obtaining the perfluoroelastomer crosslinked product from the perfluoroelastomer composition may be a method involving forming the perfluoroelastomer composition as a molding material to obtain a preform, and then crosslinking the preform. The method for obtaining the preform may be a commonly used method, and can be performed by a known method such as a method involving heating and compressing the composition in a mold, a method involving pressing the composition into a heated mold, and a method involving extruding the composition with an extruder. In the case of an extruded product such as a hose and an electric wire, the perfluoroelastomer crosslinked product can be obtained by heating and crosslinking the composition with steam or the like after extrusion.

The above crosslinking can be carried out in the order of primary crosslinking and secondary crosslinking. The primary crosslinking is preferably carried out at 150 to 250°C for 5 to 120 minutes, and more preferably at 170 to 200°C for 5 to 60 minutes. The crosslinking means may be a known crosslinking means, and an example may be press crosslinking.

The secondary crosslinking is preferably carried out at 180 to 320°C for 2 to 48 hours, and more preferably at 200 to 310°C for 5 to 24 hours. The temperature may be changed within this temperature range. The crosslinking means may be a known crosslinking means, and an example may be oven crosslinking.

The perfluoroelastomer crosslinked product of the present disclosure can be suitably used as a sealing material especially for semiconductor manufacturing apparatuses that require heat resistance, and, in particular, semiconductor manufacturing apparatuses where high density plasma irradiation is carried out. Examples of the sealing material include O-rings, square-rings, gaskets, packings, oil seals, bearing seals, and lip seals.

In addition, the molded article can also be used as various polymer products used in semiconductor manufacturing apparatus, such as diaphragms, tubes, hoses, various rubber rolls, and belts. The molded article can also be used as a coating material and a lining material.

Note that the semiconductor manufacturing apparatuses as used herein are not limited to those especially for manufacturing semiconductors, and encompass a wide variety of manufacturing apparatuses used in the semiconductor field where a high level of cleanliness is required, such as those for manufacturing liquid crystal panels and plasma panels, and examples are as follows.

(1) Etching apparatus

Dry etching apparatus
Plasma etching apparatus
Reactive ion etching apparatus
Reactive ion beam etching apparatus
Sputter etching apparatus
Ion beam etching apparatus
Wet etching apparatus
Ashing apparatus

(2) Cleaning apparatus dry etching cleaning apparatus

$UV/O_3$ cleaning apparatus
Ion beam cleaning apparatus

Laser beam cleaning apparatus
Plasma cleaning apparatus
Gas etching cleaning apparatus
Extraction cleaning apparatus
Soxhlet extraction cleaning apparatus
High-temperature high-pressure extraction cleaning apparatus
Microwave extraction cleaning apparatus
Supercritical extraction cleaning apparatus

(3) Exposure apparatus

Stepper
Coater/developer

(4) Polishing apparatus

CMP apparatus

(5) Film forming apparatuses

CVD apparatus
Sputtering apparatus

(6) Diffusion/ion implantation apparatus

Oxidation diffusion apparatus
Ion implantation apparatus

The perfluoroelastomer crosslinked product of the present disclosure delivers excellent performance as a sealing material for, for example, CVD apparatuses, plasma etching apparatuses, reactive ion etching apparatuses, ashing apparatuses, and excimer laser exposure machines.

While embodiments have been described above, it will be understood that various changes in form and detail can be made without departing from the gist and scope of the claims.

EXAMPLES

Next, embodiments of the present disclosure will now be described by way of Examples, but the present disclosure is not limited only to these Examples.

Various numerical values in the Examples were measured by the following methods.

(Compositional feature of perfluoroelastomer)

The compositional feature was determined by $^{19}$F-NMR analysis.

(Iodine atom content of perfluoroelastomer)

A quartz flask was charged with 20 ml of pure water, 30 mg of a mixture obtained by mixing $Na_2CO_3$ and $K_2CO_3$ in a weight ratio of 1:1 with 12 mg of a perfluoroelastomer was added to a platinum basket, the mixture was combusted in oxygen in the quartz flask and left to stand for 30 minutes, 5 mg of $Na_2SO_3$ was added, the mixture was shaken to dissolve the produced combustion gas in the liquid in the quartz flask, and the concentration of iodine ions in the resulting solution was measured using a Shimadzu 20A ion chromatograph. Using a calibration curve created using a KI standard solution containing 0.5 ppm and a KI standard solution containing 1.0 ppm of iodine ions, the iodine content of the

perfluoroelastomer was determined.

(Mooney viscosity of perfluoroelastomer)

The Mooney viscosity was measured using a Mooney viscometer MV2000E manufactured by Alpha Technologies Inc. at 170°C or 100°C in accordance with JIS K 6300.

(Triazine ring content in crosslinked product)

A Fourier transform infrared spectrophotometer (FT-IR) was used to obtain the infrared spectrum of a crosslinked product, the absorbance ratio (A1555/A2360) of the triazine ring peak (1555 $cm^{-1}$) to the overtone vibration peak (2360 $cm^{-1}$) of a CF bond appearing in the infrared spectrum was calculated, and the calculated absorbance ratio was regarded as the triazine ring content in the crosslinked product.

(Iodine atom content in crosslinked product)

The iodine atom content was measured by elemental analysis with an ion chromatograph of ash obtained by ashing the crosslinked product.

(Silicon atom content in crosslinked product)

The silicon atom content in the crosslinked product was determined by calculation from the compositional feature of the composition used to prepare the crosslinked product. The presence/absence and the content of silicon atoms in the crosslinked product can also be measured by energy dispersive X-ray analysis (EDX) of the crosslinked product. In Table 1, the case where it was possible to detect silicon atoms in the crosslinked product by EDX is denoted as "present", and the case where it was not possible to detect silicon atoms in the crosslinked product by EDX is denoted as "absent".

(Total light transmittance, haze value)

The total light transmittance and the haze value were measured using the crosslinked product having a thickness of 2 mm and a Haze Guard II (product name) (manufactured by Toyo Seiki Seisaku-sho, Ltd.) in accordance with ASTM D1003.

(Compression set rate)

The compression set rate was measured according to the method described in ASTM D395 or JIS K 6262. The O-rings produced in the Examples and Comparative Examples were compressed to a compressibility of 25% at normal temperature using a compression device (the O-rings with a thickness (cross-sectional diameter) of 3.5 mm were compressed to a thickness of 2.625 mm) .

Next, the compression device to which the compressed O-ring was fixed was gently placed in an electric furnace and left to stand still at 300°C for 72 hours, and then the compression device was removed from the electric furnace. The O-ring was removed from the compression device, the removed O-ring was gently placed in a thermostatic chamber and left to stand still at 23°C for 30 minutes, and the thickness of the O-ring ($t_2$) was measured. The compression set was determined by the equation below.

$$\text{Compression set rate (\%)} = (t_0 - t_2)/(t_0 - t_1) \times 100$$

$t_0$: original thickness of O-ring (mm)
$t_1$: thickness of spacer (mm)
$t_2$: thickness of O-ring after compression test (mm)

In the above test, $t_0$ was 3.5 mm and $t_1$ was 2.625 mm.

(Ordinary-state properties)

Using the crosslinked product with a thickness of 2 mm, the tensile strength at break (MPa), the 100% modulus

(MPa), and the elongation at break (%) were measured according to JIS K 6251.

(Hardness (Shore A) Peak)

Using the crosslinked product with a thickness of 2 mm, the hardness (Shore A) was measured according to JIS K 6253 (peak value) .

The following materials were used in the Examples and Comparative Examples.

<Nitrile group-containing perfluoroelastomer (A)> Elastomer (a1)

Composition: $TFE/PMVE/CF_2=CFOCF_2CF(CF_3)OCF_2CF_2CN$ = 59.4/40.1/0.5 (mol%)
Mooney viscosity (ML 1+20 (170°C)): 80
The nitrile group-containing perfluoroelastomer (A) has a polar terminal group (a carboxylate group).

<Iodine or bromine-containing perfluoroelastomer not containing nitrile group (B)>

Elastomer (b1)

Compositional feature: $TFE/PMVE/CF_2=CFOCF_2CF_2CH_2I$ = 66.7/33.2/0.1 (mol%)
Mooney viscosity (ML 1+10 (100°C)): 65
Iodine atom content: 0.40 wt%

Elastomer (b2)

Compositional feature:

$TFE/CF_2 = CF(OCF_2CF(CF_3)_2OCF_2CF_2CF_3/CF_2=CFOCF_2CF_2CH_2I$ = 79.6/20.2/0.4 (mol%)

Mooney viscosity (ML 1+10 (100°C)): 27
Iodine atom content: 0.20 wt%

Elastomer (b3)

Composition: TFE/PMVE=62/38 (mol%)
Mooney viscosity (ML 1+10 (100°C)): 50
Iodine atom content: 0.24 wt%

<Compound (C)>

Compound (c1): silicon nitride ($Si_3N_4$)
Compound (c2): biuret
Compound (c3): urea

Comparative Example 1

First, 0.25 phr of silicon nitride ($Si_3N_4$) (SN-A00 manufactured by Ube Industries, Ltd.) was added to the elastomer (a1), and the mixture was kneaded with an open roll to prepare a crosslinkable fluoroelastomer composition. The

resulting fluoroelastomer composition was crosslinked by being pressed at 180°C for 20 minutes and then oven-crosslinked at 200 to 290°C for 18 hours in an oven to produce a molded article of a crosslinked product having a thickness of 2 mm and a molded article of an O-ring (AS-568A-214 size). Using the resulting molded articles, the total light transmittance, haze value, compression set rate, and ordinary-state properties were measured according to the methods set forth above. The results thereof are shown in Table 1.

Comparative Example 2

A fluoroelastomer composition and a molded article were produced and various evaluations were carried out in the same manner as Comparative Example 1 except that biuret (manufactured by Kanto Kagaku Chemical Co., Inc.) was used in place of silicon nitride.

Comparative Example 3

A fluoroelastomer composition and a molded article were produced and various evaluations were carried out in the same manner as Comparative Example 1 except that urea (manufactured by Kanto Kagaku Chemical Co., Inc.) was used in place of silicon nitride.

Examples 1 to 4

According to the formulation/compositional feature set forth in Table 1, silicon nitride (SN-A00 manufactured by Ube Industries, Ltd.) and the elastomer (b1) were added to the elastomer (a1), and the mixture was kneaded with an open roll to prepare a crosslinkable fluoroelastomer composition. The resulting fluoroelastomer composition was crosslinked by being pressed at 180°C for 20 minutes and then oven-crosslinked at 200 to 290°C for 18 hours in an oven to produce a molded article of a crosslinked product having a thickness of 2 mm and a molded article of an O-ring (AS-568A-214 size). Using the resulting molded articles, the total light transmittance, haze value, compression set rate, and ordinary-state properties were measured according to the methods set forth above.

Example 5

A fluoroelastomer composition and a molded article were produced and various evaluations were carried out in the same manner as Example 3 except that the elastomer (b2) was used in place of the elastomer (b1).

Example 6

A fluoroelastomer composition and a molded article were produced and various evaluations were carried out in the same manner as Example 3 except that the elastomer (b3) was used in place of the elastomer (b1).
The results of the above measurements are shown in Table 1.

[Table 1]

Table 1

| | | Comparative Example 1 | Comparative Example 2 | Comparative Example 3 | Example 1 | Example 2 | Example 3 | Example 4 | Example 5 | Example 6 |
|---|---|---|---|---|---|---|---|---|---|---|
| Compositional feature of composition | | | | | | | | | | |
| Elastomer (a1) | phr | 100 | 100 | 100 | 100 | 100 | 100 | 100 | 100 | 100 |
| Silicon nitride | phr | 0.25 | | | 0.25 | 0.25 | 0.25 | 0.25 | 0.25 | 0.25 |
| Biuret | phr | | 0.35 | | | | | | | |
| Urea | phr | | | 0.30 | | | | | | |
| Elastomer (b1) | phr | | | | 1.0 | 3.0 | 5.0 | 10.0 | | |
| Elastomer (b2) | phr | | | | | | | | 5.0 | |
| Elastomer (b3) | phr | | | | | | | | | 5.0 |
| Configuration of crosslinked product | | | | | | | | | | |
| Triazine ring content | - | 0.057 | 0.030 | 0.037 | 0.056 | 0.056 | 0.058 | 0.048 | 0.066 | 0.055 |
| Iodine atom content | wt% | | | | 0.0008 | 0.0014 | Not measured | 0.0020 | Not measured | Not measured |
| Silicon atom content | wt% | 0.15 | 0.00 | 0.00 | 0.15 | 0.15 | 0.14 | 0.14 | 0.14 | 0.14 |
| Presence/absence of silicon atom detected (EDX) | | Present | Absent | Absent | Present | Present | Present | Present | Present | Present |
| Transparency of crosslinked product | | | | | | | | | | |
| Total light transmittance | % | 83.7 | 89.8 | 85.5 | 87.6 | 89.5 | 90.0 | 91.8 | 90.6 | 88.1 |
| Haze value | - | 96.2 | 24.5 | 31.1 | 90.7 | 81.0 | 77.4 | 63.8 | 70.2 | 85.3 |
| Compression set properties of crosslinked product | | | | | | | | | | |
| Compression set rate | % | 26 | 66 | 63 | 31 | 31 | 34 | 34 | 27 | 27 |

(continued)

| Ordinary-state properties of crosslinked product | | | | | | | | | | |
|---|---|---|---|---|---|---|---|---|---|---|
| Tensile breaking strength | MPa | 14.7 | 12.0 | 10.5 | 13.4 | 16.1 | 13.6 | 14.1 | 13.0 | 14.9 |
| 100% Modulus | MPa | 1.3 | 1.3 | 1.3 | 1.3 | 1.2 | 1.3 | 1.2 | 1.2 | 1.3 |
| Elongation at break | % | 303 | 320 | 280 | 305 | 321 | 318 | 360 | 312 | 325 |
| Hardness (Shore A) Peak | | 56 | 55 | 55 | 56 | 56 | 55 | 56 | 55 | 57 |

## Claims

1. A perfluoroelastomer composition comprising:

   (A) a nitrile group-containing perfluoroelastomer,
   (B) an iodine or bromine-containing perfluoroelastomer not containing nitrile group, and
   (C) at least one compound selected from the group consisting of an inorganic nitride and an ammonia-generating compound.

2. The perfluoroelastomer composition according to claim 1, wherein a content of the iodine or bromine-containing perfluoroelastomer (B) is 0.5 to 10 parts by mass based on 100 parts by mass of the nitrile group-containing perfluoroelastomer (A) .

3. The perfluoroelastomer composition according to claim 1 or 2, wherein the compound (C) is silicon nitride.

4. A perfluoroelastomer crosslinked product obtained by crosslinking the perfluoroelastomer composition according to any one of claims 1 to 3.

5. A perfluoroelastomer crosslinked product having a haze value of 95% or less and a compression set of 25 to 40%.

6. The perfluoroelastomer crosslinked product according to claim 5, having a total light transmittance of 85% or more.

7. The perfluoroelastomer crosslinked product according to claim 5 or 6, comprising triazine ring.

8. The perfluoroelastomer crosslinked product according to any one of claims 5 to 7, comprising iodine atom or bromine atom.

9. The perfluoroelastomer crosslinked product according to any one of claims 5 to 8, comprising silicon atom.

**INTERNATIONAL SEARCH REPORT**

International application No.
**PCT/JP2022/045699**

**A. CLASSIFICATION OF SUBJECT MATTER**

***C08L 27/12***(2006.01)i; ***C08K 3/34***(2006.01)i
FI: C08L27/12; C08K3/34

According to International Patent Classification (IPC) or to both national classification and IPC

**B. FIELDS SEARCHED**

Minimum documentation searched (classification system followed by classification symbols)

C08L27/12; C08K3/34

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-531316 A (3M INNOVATIVE PROPERTIES COMPANY) 25 October 2018 (2018-10-25)<br>claims, paragraph [0100], examples | 1-2, 4-8 |
| Y | paragraph [0048] | 3, 9 |
| Y | WO 2017/208927 A1 (NIPPON VALQUA INDUSTRIES, LTD.) 07 December 2017 (2017-12-07)<br>paragraphs [0040], [0045] | 3, 9 |
| A | JP 2001-504885 A (E.I. DU PONT DE NEMOURS AND COMPANY) 10 April 2001 (2001-04-10) | 1-9 |
| A | WO 2020/026909 A1 (DAIKIN INDUSTRIES, LTD.) 06 February 2020 (2020-02-06) | 1-9 |
| A | WO 2020/235565 A1 (DAIKIN INDUSTRIES, LTD.) 26 November 2020 (2020-11-26) | 1-9 |
| A | JP 2005-48193 A (E.I. DU PONT DE NEMOURS AND COMPANY) 24 February 2005 (2005-02-24) | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/045699**

**Box No. III Observations where unity of invention is lacking (Continuation of item 3 of first sheet)**

This International Searching Authority found multiple inventions in this international application, as follows:

Document 1: JP 2018-531316 A (3M INNOVATIVE PROPERTIES COMPANY) 25 October 2018 (2018-10-25), claims, paragraph [0100], examples & US 2018/0312678 A1, claims, paragraph [0106], examples

The claims are classified into the following two inventions.

(Invention 1) Claims 1-4
Document 1 discloses the composition in claim 1 (in particular, see paragraph [0100], example 2), and claim 1 lacks novelty in light of document 1 and thus does not have a special technical feature. However, claim 2, which is dependent on claim 1, has the special technical feature in which “the content of an iodine- or bromine-containing perfluoroelastomer (B) is 0.5-10 parts by mass with respect to 100 parts by mass of a nitrile group-containing perfluoroelastomer (A)”. Therefore, claims 1-2 are classified as invention 1. Moreover, claims 3-4 are dependent on claim 1 and inventively related to claim 1, and are thus classified as invention 1.

(Invention 2) Claims 5-9
Claims 5-9 cannot be said to share a same or corresponding special technical feature with claims 1-4 classified as invention 1.
Moreover, claims 5-9 are also not dependent on any of claims 1-4. Furthermore, claims 5-9 are not substantially identical to or similarly closely related to any of the claims classified as invention 1.
Accordingly, claims 5-9 cannot be classified as invention 1.
In addition, claims 5-9 have the technical feature of a “perfluoroelastomer crosslinked product having a haze value of at most 95% and a compressive permanent strain of 25-40%”, and are thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant’s protest and, where applicable, the payment of a protest fee.

☐ The additional search fees were accompanied by the applicant’s protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/JP2022/045699**

| Patent document cited in search report | Publication date (day/month/year) | Patent family member(s) | Publication date (day/month/year) |
|---|---|---|---|
| JP 2018-531316 A | 25 October 2018 | US 2018/0312678 A1<br>claims, paragraphs [0052], [0106], examples<br>WO 2017/070172 A1<br>EP 3365389 A1<br>TW 201731881 A<br>SG 11201803368S A<br>KR 10-2018-0071291 A<br>CN 108350244 A | |
| WO 2017/208927 A1 | 07 December 2017 | US 2020/0317901 A1<br>paragraphs [0048]-[0049], [0055]<br>EP 3467025 A1<br>SG 11201809392U A<br>CN 109153835 A<br>KR 10-2019-0013809 A<br>TW 201809112 A | |
| JP 2001-504885 A | 10 April 2001 | US 5677389 A<br>WO 1998/023675 A1<br>EP 939785 A1 | |
| WO 2020/026909 A1 | 06 February 2020 | EP 3831877 A1<br>KR 10-2021-0024137 A<br>CN 112543788 A<br>TW 202016194 A | |
| WO 2020/235565 A1 | 26 November 2020 | US 2022/0243047 A1<br>EP 3974473 A1<br>CN 113825795 A<br>KR 10-2022-0005018 A<br>TW 202106790 A | |
| JP 2005-48193 A | 24 February 2005 | US 5789509 A<br>US 5936060 A<br>US 5973091 A<br>US 6114452 A<br>US 6211319 B1<br>WO 1998/023653 A1<br>WO 1998/023655 A1<br>EP 939776 A1<br>EP 939778 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5500070 W
- JP 2004532902 W
- JP 9111081 A